# EUROPÄISCHE PATENTSCHRIFT

(11) **EP 2 873 512 B1**
(45) Veröffentlichungstag und Bekanntmachung des Hinweises auf die Patenterteilung: **31.01.2018**
(21) Anmeldenummer: 14191639.5
(22) Anmeldetag: 04.11.2014
(51) Int. Cl.: B29C 65/08, B29C 65/74

(54) **Vorrichtung zum Stanzen und Schweißen von Kunststoffteilen**
Device for stamping and welding plastic parts
Dispositif de poinçonnage et de soudage de pièces en matière plastique

(30) Priorität: 15.11.2013 DE 102013223379
(43) Veröffentlichungstag der Anmeldung: 20.05.2015
(73) Patentinhaber: MS Ultraschall Technologie GmbH, 78549 Spaichingen (DE)
(72) Erfinder: Scheu, Jochen, 78054 Villingen-Schwenningen (DE); Baumeister, Thomas, 78554 Aldingen (DE); Krell, Volker, 78579 Neuhausen ob Eck (DE)
(74) Vertreter: Manitz Finsterwald Patentanwälte PartmbB

(56) Entgegenhaltungen:
- EP-A1- 1 798 019
- EP-A2- 1 849 583
- WO-A1-2011/117550
- GB-A- 2 320 906
- JP-A- S6 174 825
- US-B1- 6 309 490

## Beschreibung

Die vorliegende Erfindung betrifft eine Vorrichtung zum Stanzen und Schweißen, von Kunststoffteilen, insbesondere von Kunststoffteilen für Kraftfahrzeuge, nach dem Oberbegriff des Anspruchs 1 (vgl. EP 1 798 019 A1). Für ein Verbinden mittels Kleben kann die Sonotrode durch ein zum Verkleben geeignetes Werkzeug ersetzt sein. Im Folgenden wird jedoch der Einfachheit halber lediglich ein Verbinden durch Verschweißen beschrieben, wobei die Erfindung jedoch auch ein Verbinden durch Kleben umfasst.

Eine solche Vorrichtung dient dazu, Durchbrüche in Werkstücke einzubringen und weitere Werkstücke im Bereich des Durchbruchs zu befestigen bzw. anzuschweißen. Beispielsweise können mit derartigen Vorrichtungen Durchbrüche für Sensoren in Stoßfänger eingebracht werden, wobei zur Befestigung des Sensors ein Adapter im Bereich des Durchbruchs verschweißt werden kann.

Bei den gattungsgemäßen Vorrichtungen ist angestrebt, dass das HauptWerkstück, d.h. z.B. der Stoßfänger, zwischen den Arbeitsgängen nicht bewegt werden muss. Weiterhin soll die Stellfläche einer solchen Vorrichtung möglichst gering sein. Zudem ist der Bauraum für einzelne Komponenten der Vorrichtung aufgrund der im Querschnitt meist U-förmigen Ausbildung von Stoßfängern stark eingeschränkt.

Bei der aus dem oben genannten Stand der Technik bekannten Vorrichtung wird die Stanzmatrize über einen Schlitten auf einer schiefen Ebene relativ zur Stanzrichtung bewegt. Aufgrund des hohen Platzbedarfs für die Verschiebung der Stanzmatrize begrenzt dies die Anwendungsmöglichkeiten. Das Gleiche gilt für Vorrichtungen, bei denen die Stanzmatrize beispielsweise geschwenkt wird.

Aus der US 6 309 490 B1 ist eine Vorrichtung zum Stanzen und Schweißen von Kunststoffteilen bekannt, bei der eine Sonotrode mit integriertem Stanzstempel an einem Oberwerkzeug befestigt ist.
Die EP 1 849 583 A2 offenbart eine Sonotrode mit integriertem Stanzstempel, um vor oder nach einer Ultraschallbearbeitung des Werkstücks zu stanzen.

In der GB 2 320 906 A ist eine Sonotrode mit integriertem Stanzstempel bekannt.
Die JP S6174825 A offenbart eine Nadel zum Aufbringen eines Klebstoff zwischen zwei Gewebelagen.
Es ist die Aufgabe der vorliegenden Erfindung, eine Vorrichtung zum Stanzen und Schweißen von Kunststoffteilen nach dem Oberbegriff des Anspruchs 1 derart weiterzubilden, dass diese vereinfacht ist, und dass der Platzbedarf für Stanzmatrize und Sonotrode innerhalb der Vorrichtung minimiert ist.
Die Lösung dieser Aufgabe erfolgt bei einer Vorrichtung der gattungsgemäßen Art dadurch, dass die Sonotrode starr an dem Werkzeug befestigt ist und die Stanzmatrize starr an der Sonotrode oder an dem Werkzeug befestigt ist. In diesem Fall erfolgt weder eine Relativbewegung der Sonotrode noch der Stanzmatrize. Vielmehr sind diese beiden Komponenten in ihrer Relativstellung so justiert, dass nach dem Stanzen oder nach dem Schweißen unmittelbar das Schweißen oder das Stanzen erfolgen kann, ohne dass diese Komponenten nochmals bewegt werden müssten.
Vorteilhafte Ausführungsformen der Erfindung sind in der Beschreibung, der Zeichnung sowie den Unteransprüchen beschrieben.

Nach einer vorteilhaften Ausführungsform kann die Sonotrode im Wesentlichen zylinderförmig sein, wobei die Stanzmatrize im Inneren der Sonotrode angeordnet und über Öffnungen in der Sonotrode nach außen geführt ist. Auf diese Weise kann die Sonotrode einerseits frei schwingen und andererseits können die Stanzkräfte durch die aus der Sonotrode herausgeführte Stanzmatrize vom Werkzeug aufgenommen werden.

Nach einer weiteren vorteilhaften Ausführungsform können Sonotrode und Stanzmatrize einstückig miteinander verbunden sein. Sofern die Toleranzen der zu verschweißenden Bauteile es erforderlich machen, können jedoch Sonotrode und Stanzmatrize auch verstellbar, d.h. justierbar miteinander verbunden sein oder aber relativ zueinander einstellbar an dem Werkzeug befestigt sein.

Ebenfalls offenbart ist ein Verfahren zum Stanzen und Verschweißen von zumindest zwei Kunststoffteilen, insbesondere mit einer Vorrichtung der vorstehend beschriebenen Art, wobei die beschriebenen Kunststoffteile zunächst mit einer Sonotrode miteinander verschweißt werden, und wobei nach der Verschweißung in ein und derselben Vorrichtung anschließend zumindest eines der Kunststoffteile durchstanzt wird.

Bei diesem Verfahren ist die aus dem Stand der Technik bekannte und übliche Reihenfolge, bei der zuerst gestanzt und anschließend verschweißt wird, genau umgekehrt. Hierdurch ergibt sich der große Vorteil, dass zum einen während des Stanzvorgangs bereits beide Bauteile miteinander verschweißt sind, so dass hier keine Relativverschiebung vorkommen kann. Andererseits kann der Schweißvorgang so vorgenommen werden, dass im Bereich des (späteren) Stanzlochs eine durchgehende stoffschlüssige Schweißverbindung geschaffen ist. Auch hier ist es vorteilhaft, wenn die beiden Kunststoffteile während der Bearbeitung relativ zum Bearbeitungswerkzeug nicht bewegt werden müssen.

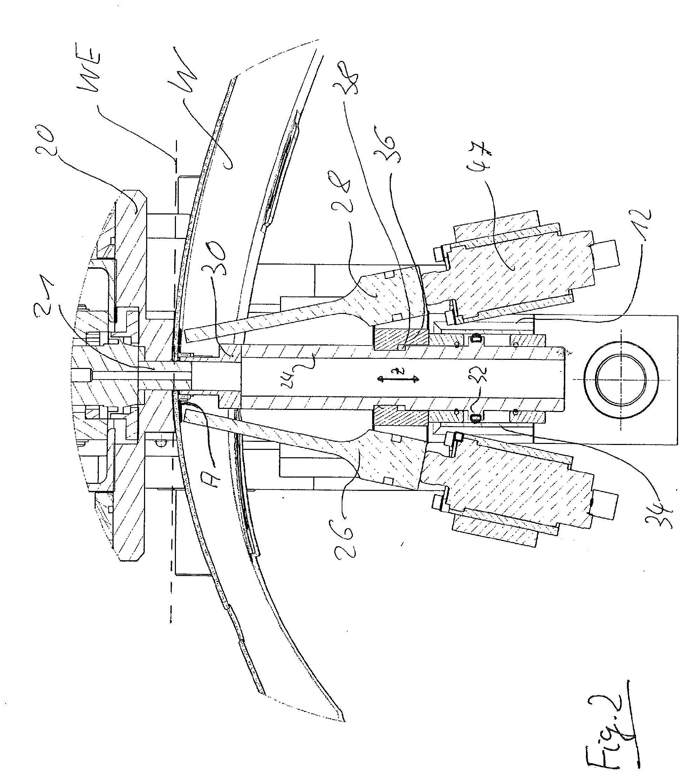

Nachfolgend wird die vorliegende Erfindung rein beispielhaft anhand vorteilhafter Ausführungsformen und unter Bezugnahme auf die beigefügten Zeichnungen beschrieben.
Es zeigen:
- Fig. 1: eine perspektivische Ansicht einer ersten Ausführungsform, die nicht Teil der Erfindung ist;
- Fig. 2: eine vergrößerte Querschnittsansicht eines Teils der Vorrichtung von Fig. 1;
- Fig. 3: eine Querschnittsansicht einer weiteren Ausführungsform;
- Fig. 4: eine Querschnittsansicht einer weiteren Ausführungsform;
- Fig. 5: eine Querschnittsansicht einer weiteren Ausführungsform; und
- Fig. 6: eine Querschnittsansicht einer weiteren Ausführungsform der Erfindung.

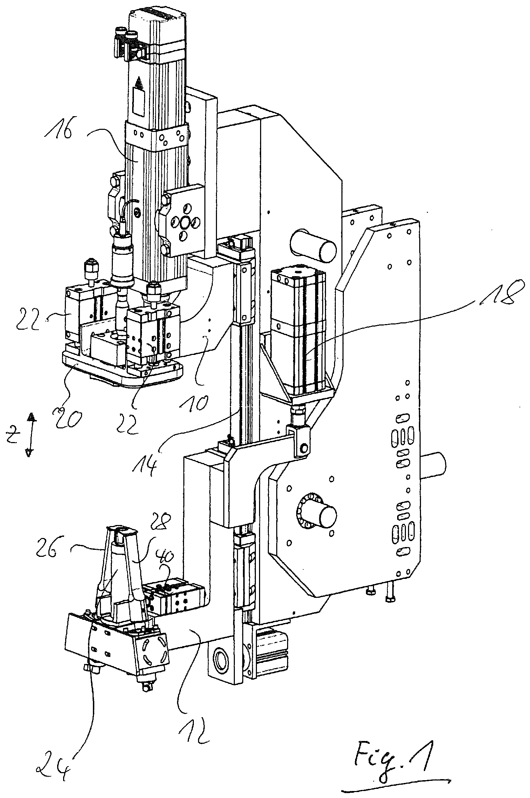

Fig. 1 zeigt eine perspektivische Ansicht einer Vorrichtung zum Stanzen und Schweißen von Kunststoffteilen, beispielsweise zum Verschweißen eines Adapters an einem Stoßfänger und zum Einbringen eines Stanzlochs in den Stoßfänger oder in den Stoßfänger und den Adapter.
Die Vorrichtung weist ein Oberwerkzeug 10 und ein Unterwerkzeug 12 auf, die im Wesentlichen senkrecht zu einer Werkstückebene WE (Fig. 2) in Richtung des Doppelpfeils z relativ zueinander anstellbar sind. Wie zu erkennen ist, können beide Werkzeuge 10 und 12 entlang einer Linearführung 14 in Richtung z aufeinander zu und voneinander weg bewegt werden, wobei zum Verschieben des Oberwerkzeugs 10 ein Stellzylinder 16 und zum Verschieben des Unterwerkzeugs 12 ein Stellzylinder 18 vorgesehen sind.

Insgesamt ergibt sich durch diese Anordnung ein grundsätzlich C-förmiger Stanzbügel, wobei zum Stanzen eines Stoßfängers mehrere dieser Stanzbügel nebeneinander angeordnet sind. Bei geöffneten Werkzeugen kann dann ein Stoßfänger in den Raum zwischen den jeweiligen Oberwerkzeugen und Unterwerkzeugen eingelegt werden.

Wie Fig. 1 weiter verdeutlicht, ist an dem Oberwerkzeug 10 ein Stanzwerkzeug 21 (Fig. 2) mit einem Niederhalter 20 angeordnet. Das Stanzwerkzeug 21 kann in z-Richtung senkrecht zur Werkstückebene oder unter einem geringen Winkel zur z-Achse geneigt nach unten bewegt werden, um den Stanzvorgang durchzuführen. Der Niederhalter kann durch am Oberwerkzeug 10 befestigte Stellzylinder 22 bewegt werden.

An dem Unterwerkzeug 12 sind zum Stanzen und Schweißen eine Stanzmatrize 24 und zwei Sonotroden 26, 28 angebracht, wobei diese Anordnung in Fig. 2 in vergrößertem Querschnitt dargestellt ist.

Wie Fig. 2 verdeutlicht, sind die beiden Sonotroden 26 und 28 starr an dem Unterwerkzeug 12 befestigt, wohingegen die Stanzmatrize 24 über eine Hubeinrichtung an dem Werkzeug 12 befestigt ist, mit der die Stanzmatrize 24 ausschließlich in Richtung der Achse z relativ zu den Sonotroden 26 und 28 verstellbar ist. Die beiden Sonotroden 26 und 28 sind zu beiden Seiten der der grundsätzlich hohlzylinderförmigen Stanzmatrize 24 angeordnet und die Sonotrode sind unter einem Winkel von etwa 15° zur Mittelachse der Stanzmatrize 24 geneigt. Durch die hohlzylinderförmige Ausbildung der Stanzmatrize 24 kann der Stanzabfall auf besonders einfache Weise nach unten mittels Schwerkraft abgeführt werden.

Die Stanzmatrize 24 selbst besitzt an ihrem oberen Ende einen Stanzaufsatz 30. Im Bereich des unteren Endes ist die Stanzmatrize 24 einstückig mit einem umlaufenden Ringsteg versehen, der als Kolben 32 dient, welcher in einem Zylinder 34 geführt ist, welcher am Werkzeug 12 befestigt ist. Durch Beaufschlagen der Räume oberhalb oder unterhalb des Kolbens 32, der an seinem Außenumfang über eine Kolbendichtung abgedichtet ist, mit Druckfluid lässt sich die Stanzmatrize 24 in Richtung der Achse z nach oben und nach unten bewegen, wobei in Fig. 2 die oberste Stellung dargestellt ist, in welcher der Stanzaufsatz 30 die von dem Stanzwerkzeug 21 aufgebrachten Kräfte aufnehmen kann.

Bei dieser Ausführungsform wird bei geöffneten Werkzeugen 10 und 12 ein Werkstück W in eine (nicht näher dargestellte) Werkstückaufnahme eingelegt, so dass sich das Werkstück W in der in Fig. 2 dargestellten Position befindet. Anschließend wird die Stanzmatrize 24 in ihre obere (dargestellte) Position verschoben, indem der Kolben 32 an seiner Unterseite mit Druck beaufschlagt wird. Damit beim anschließenden Stanzvorgang die Kräfte nur vom Werkzeug 12 aufgenommen werden, wird anschließend ein Riegel 36 in eine Aussparung der Stanzmatrize 24 eingefahren, so dass bei Ausüben einer Kraft auf die Stanzmatrize 24 diese Kraft über den Riegel 36 direkt in das Werkzeug 12 eingeleitet wird. Das Betätigen des Riegels, der zu zwei Seiten der Stanzmatrize 24 angeordnet ist, erfolgt über einen Stellzylinder 40 (Fig. 1), der quer zur Richtung der Achse z wirkt.

Nach Durchführung des Stanzvorgangs wird die Stanzmatrize 24 entweder zurückgezogen oder aber mit einem geringen Druck in Richtung des Werkstücks angestellt, so dass ein mit dem Werkstück W zu verschweißendes Bauteil, beispielsweise eine Adapterplatte A gegen das Werkstück W gedrückt wird und mit Hilfe der Sonotroden 26 und 28 verschweißt werden kann.

Bei der vorstehend beschriebenen Vorrichtung ist jedoch auch eine andere Verfahrensweise möglich, bei der die Adapterplatte A zunächst von der Stanzmatrize 24 leicht gegen das Werkstück W gedrückt wird und anschließend verschweißt wird und wobei erst nach dem Schweißvorgang ein Durchstanzen des Werkstücks W erfolgt. Auch hier wird zur Aufnahme der Stanzkräfte die Stanzmatrize 24 mit Hilfe des Riegels 36 arretiert.

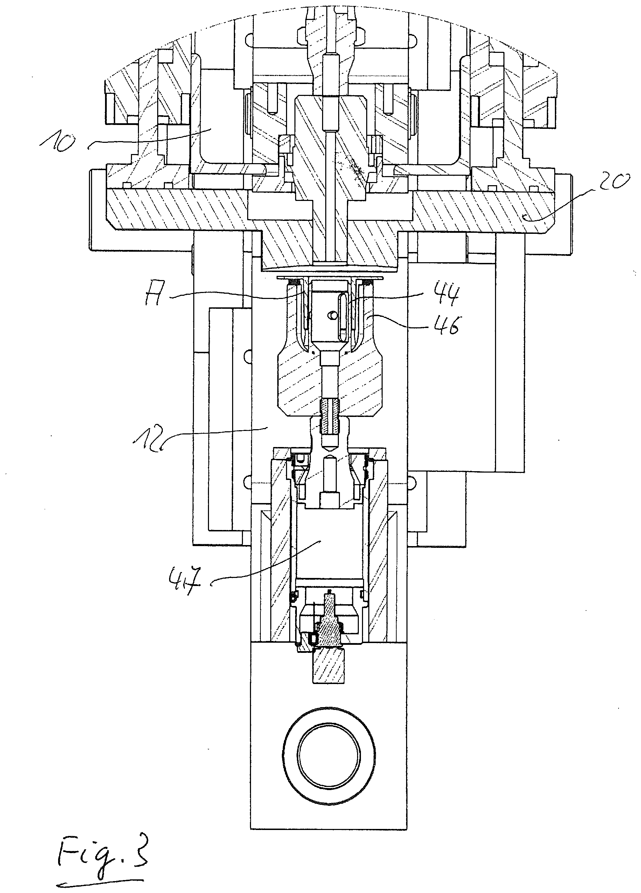

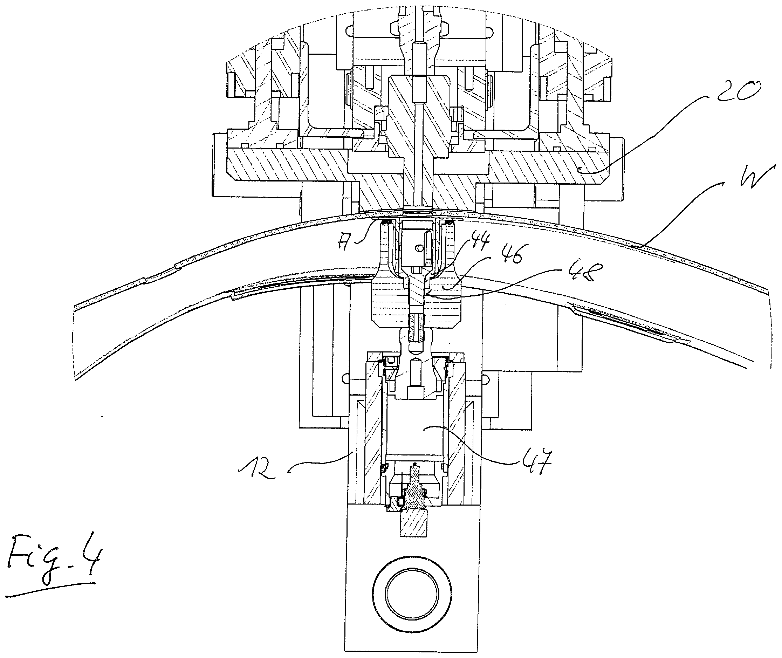

Fig. 3 zeigt eine vergrößerte Querschnittsansicht einer weiteren Ausführungsform einer Vorrichtung zum Stanzen und Schweißen von Kunststoffteilen, wobei die in Fig. 3 (und auch die in den Fig. 4 - 6) nicht erkennbaren Komponenten der Ausführungsform der Fig. 1 entsprechen.

Bei der in Fig. 3 dargestellten Ausführungsform ist an dem Unterwerkzeug 12 eine Sonotrode 46 befestigt, die als Rundsonotrode ausgebildet ist, d.h. als grundsätzlich zylinderförmiger Körper, der an seinem oberen Ende offen ist und einen umlaufenden hohlzylindrischen Körper aufweist, dessen Stirnfläche als Schweißfläche dient. Bei der Darstellung von Fig. 3 ist wiederum eine Adapterplatte A auf die Sonotronde 46 aufgelegt (das Werkstück W ist hier nicht dargestellt).

Um die beim Stanzen entstehenden Gegenkräfte aufzunehmen, weist die in Fig. 3 dargestellte Sonotrode 46 eine einstückig mit der Sonotrode verbundene Stanzmatrize 44 auf, die die Form eines Hohlzylinders besitzt und sich bis in den Bereich der Schweißfläche erstreckt.

Bei der Ausführungsform der Fig. 3 wird zuerst der Schweißvorgang mit Hilfe der Sonotrode 46 gestartet und die Sonotrode wirkt auf die Adapterplatte A bzw. dringt in die zu verschweißenden Werkstücke ein, bis eine ausreichende Verbindung vorliegt und die Stanzmatrize 44 das Werkstück W (in Fig. 3 nicht dargestellt) berührt. Hierbei kann auch im Bereich der Stanzmatrize 46 durch einen oder mehrere Energierichtungsgeber in der Adapterplatte eine flächige Verschweißung nahe am Stanzdurchmesser erfolgen. In einem zweiten Arbeitsschritt wird dann in das Werkstück W oder auch in das Werkstück W und in die Adapterplatte A ein Durchbruch gestanzt. Hierdurch entsteht beim Verschweißen kein Versatz und es kann eine umlaufende Verschweißung direkt am Stanzloch entstehen. Auch hier kann zur Aufnahme der Stanzkraft während der Stanzbewegung eine mechanische Abstützung zwischen der Sonotrode (und der damit einstückig verbundenen Stanzmatrize) und dem Unterwerkzeug 12 eingefahren werden.

Eine zu Fig. 3 ähnliche Vorrichtung zum Stanzen und Schweißen von Kunststoffteilen ist in Fig. 4 dargestellt. In dieser Ausführungsform ist die Stanzmatrize 44 nicht einstückig mit der Sonotrode 46 verbunden sondern sie ist über eine Schraubverbindung 48 in die Sonotrode 46 eingeschraubt. Durch die verschraubte Verbindung von Stanzmatrize 44 und Sonotrode 46 können die Höhen dieser beiden Bauteile zueinander durch unterschiedliche Distanzstücke ausgeglichen bzw. eingestellt werden. Auch hier wird wie bei der Ausführungsform der Fig. 3 zunächst geschweißt und anschließend gestanzt.

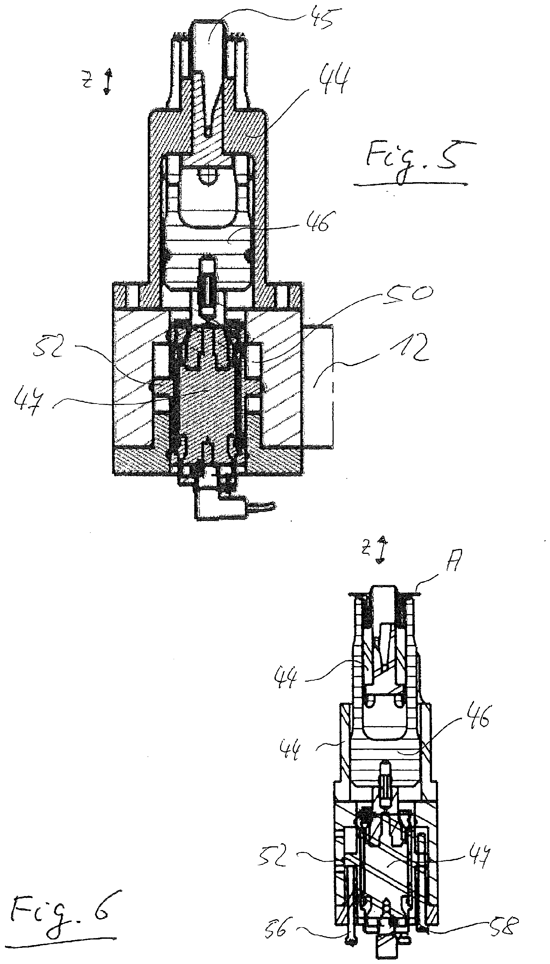

Fig. 5 zeigt eine weitere Ausführungsform einer Sonotrode 46, die an dem beweglichen Unterwerkzeug 12 befestigt ist. Bei dieser Ausführungsform ist die Stanzmatrize 44 starr mit dem Unterwerkzeug 12 verbunden und die Sonotrode 46 ist wiederum als Rundsonotrode ausgebildet, wobei sich in dem oberen hohlzylindrischen Abschnitt der Rundsonotrode mehrere zur Oberseite hin offene Schlitze befinden, durch welche die Stanzmatrize 44 hindurchgeführt werden kann. Die Stanzmatrize weist an ihrem oberen Ende einen hohlzylindrischen Endabschnitt 45 auf, der beim Stanzen an der Unterseite der Adapterplatte A anliegt und die auftretenden Kräfte direkt auf das Unterwerkzeug 12 überträgt.

Um eine Relativbewegung zwischen Stanzwerkzeug 44 und Sonotrode 46 zu erzielen, kann die Sonotrode 46 bei dieser Ausführungsform relativ zur Stanzmatrize 44 und relativ zu dem Unterwerkzeug 12 in Richtung z verschoben werden.

Hierzu ist in dem Unterwerkzeug 12 ein Zylinderabschnitt 50 vorgesehen, in dem ein Konverter 47 der Sonotrode 46 verschiebbar angeordnet ist. Mit dem Konverter 47 ist ein umlaufender Ringsteg 52 verbunden, der über einen Dichtring am Außenumfang abgedichtet ist und der als Kolben dient. Zu beiden Seiten des Stegs 52 kann Druckfluid eingebracht werden, um die Sonotrode 46 in Richtung des Doppelpfeils z nach oben oder nach unten zu bewegen. Hierdurch kann die Sonotrode beim Stanzen abgesenkt werden, so dass die Stanzkraft nur von der Stanzmatrize 44 aufgenommen wird und die Sonotrode nicht belastet wird. Zum Schweißen wird die Sonotrode 46 angehoben und mit einem wählbaren Druck an der Adapterplatte A angelegt. Bei dieser Ausführungsform kann die Reihenfolge der Verfahrensschritte gewählt werden, d.h. es kann zuerst geschweißt oder aber zuerst gestanzt werden.

Eine zu Fig. 5 ähnliche Ausführungsform von Sonotrode und Stanzmatrize ist in Fig. 6 dargestellt. Bei dieser Ausführungsform sind die Stanzmatrize 44 und die Sonotrode 46 nicht fest miteinander verbunden jedoch in der Höhe relativ zueinander einstellbar. Die Sonotrode 46 kann in Richtung des Doppelpfeils z relativ zur Stanzmatrize 46 manuell justiert werden, wobei sich die Lage der Stanzmatrize 44 nicht verändert, da diese fest mit dem Unterwerkzeug 12 verbunden ist. Im Übrigen ist die Stanzmatrize 44 in gleicher Weise wie bei der Ausführungsform von Fig. 5 ausgebildet und durch nach oben offene Schlitze in der Sonotrode durchgeführt.

Um eine manuelle Justierung der Sonotrode relativ zur Matrize ohne weitere Hilfsmittel zu erreichen, sind an der Unterseite der Anordnung mehrere in einem unteren Deckel verschraubte Stellschrauben 56 vorgesehen, mit denen die untere Endposition des Ringstegs 52 und somit auch der Sonotrode 46 eingestellt werden kann. Mit Hilfe von weiteren Stellschrauben 58, die in dem Ringsteg 52 verschraubt sind, kann die Höhenposition der Sonotrode 46 eingestellt werden.

Mit den vorstehend beschriebenen Vorrichtungen lassen sich Kunststoffteile miteinander verbinden und stanzen, wobei zuerst geschweißt und dann gestanzt oder aber zuerst gestanzt und dann geschweißt werden kann. In allen Fällen bleiben jedoch die Werkstücke und insbesondere das Hauptwerkstück W, d.h. der Stoßfänger, stationär.

Eine Bewegung, sofern Sonotrode oder Stanzmatrize bewegt werden, erfolgt ausschließlich in z-Richtung, d.h. in Stanzrichtung im Wesentlichen senkrecht zur Oberfläche des Hauptwerkstücks. Somit ist der Platzbedarf für die einzelnen Komponenten minimiert, da weder Schwenkbewegungen noch seitliche Verschiebebewegungen durchgeführt werden. Auf diese Weise können die einzelnen Komponenten innerhalb des begrenzten Raums angeordnet werden, der innerhalb eines Stoßfängers zur Verfügung steht.

## Patentansprüche

1. Vorrichtung zum Stanzen und Schweißen von Kunststoffteilen, insbesondere für Kraftfahrzeuge, umfassend ein Oberwerkzeug (10) und ein Unterwerkzeug (12), die entlang einer Achse (z) senkrecht zu einer Werkstückebene (WE) relativ zueinander anstellbar sind, sowie zumindest eine Stanzmatrize (44) und zumindest eine Sonotrode (46), die beide entweder an dem Oberwerkzeug (10) oder an dem Unterwerkzeug (12) angebracht sind,
**dadurch gekennzeichnet, dass**
die Sonotrode (46) starr an dem Werkzeug (12) befestigt ist, und dass die Stanzmatrize (44) starr an der Sonotrode (46) oder an dem Werkzeug (12) befestigt ist.

2. Vorrichtung nach Anspruch 1,
**dadurch gekennzeichnet, dass**
Sonotrode (46) und Stanzmatrize (44) einstückig miteinander verbunden sind.

3. Vorrichtung nach Anspruch 1,
**dadurch gekennzeichnet, dass**
Sonotrode (46) und Stanzmatrize (44) verstellbar miteinander verbunden sind.

4. Vorrichtung nach Anspruch 1,
**dadurch gekennzeichnet, dass**
Sonotrode (46) und Stanzmatrize (44) relativ zueinander einstellbar an dem Werkzeug (12) befestigt sind.

5. Vorrichtung nach zumindest einem der vorstehenden Ansprüche,
**dadurch gekennzeichnet, dass**
die Sonotrode (46) im Wesentlichen zylinderförmig ist, und dass die Stanzmatrize (44) im Inneren der Sonotrode (46) angeordnet und über Öffnungen in der Sonotrode (46) nach außen geführt ist.

## Claims

1. An apparatus for punching and welding plastic parts, in particular for motor vehicles, comprising a top tool (10) and a bottom tool (12) which can be set relative to one another along an axis (z) perpendicular to a workpiece plane (WE); and also comprising at least one punch die (44) and at least one sonotrode (46) which are both attached either to the top tool (10) or to the bottom tool (12),
**characterized in that**
the sonotrode (46) is rigidly fastened to the tool (12); and **in that** the punch die (44) is rigidly fastened to the sonotrode (46) or to the tool (12).

2. An apparatus in accordance with claim 1,
**characterized in that**
the sonotrode (46) and the punch die (44) are connected to one another in one piece.

3. An apparatus in accordance with claim 1,
**characterized in that**
the sonotrode (46) and the punch die (44) are connected to one another adjustably.

4. An apparatus in accordance with claim 1,
**characterized in that**
the sonotrode (46) and the punch die (44) are fastened to the tool (12) adjustably relative to one another.

5. An apparatus in accordance with at least one of the preceding claims,
**characterized in that**
the sonotrode (46) is substantially cylindrical; and **in that** the punch die (44) is arranged in the interior of the sonotrode (46) and is guided to the outside via openings in the sonotrode (46).

## Revendications

1. Dispositif de poinçonnage et de soudage de pièces en matière plastique, en particulier pour des véhicules automobiles, comportant un outil supérieur (10) et un outil inférieur (12) qui peuvent être approchés l'un de l'autre le long d'un axe (z) perpendiculaire au plan d'une pièce à oeuvrer (WE), ainsi qu'au moins une matrice de poinçonnage (44) et au moins une sonotrode (46) qui sont montées toutes les deux soit sur l'outil supérieur (10) soit sur l'outil inférieur (12),
**caractérisé en ce que**
la sonotrode (46) est fixée rigidement sur l'outil (12), et **en ce que** la matrice de poinçonnage (44) est fixée rigidement sur la sonotrode (46) ou sur l'outil (12).

2. Dispositif selon la revendication 1,
**caractérisé en ce que**
la sonotrode (46) et la matrice de poinçonnage (44) sont reliées d'un seul tenant l'une à l'autre.

3. Dispositif selon la revendication 1,
**caractérisé en ce que**
la sonotrode (46) et la matrice de poinçonnage (44) sont reliées de façon déplaçable l'une à l'autre.

4. Dispositif selon la revendication 1,
**caractérisé en ce que**
la sonotrode (46) et la matrice de poinçonnage (44) sont fixées sur l'outil (12) en étant réglables l'une par rapport à l'autre.

5. Dispositif selon l'une des revendications précédentes,
**caractérisé en ce que**
la sonotrode (46) est de forme sensiblement cylindrique, et **en ce que** la matrice de poinçonnage (44) est agencée à l'intérieur de la sonotrode (46) et menée vers l'extérieur par des ouvertures dans la sonotrode (46).
